# EUROPÄISCHE PATENTSCHRIFT

(11) **EP 3 168 700 B1**
(45) Veröffentlichungstag und Bekanntmachung des Hinweises auf die Patenterteilung: **29.05.2024**
(21) Anmeldenummer: 15194052.5
(22) Anmeldetag: 11.11.2015
(51) Int. Cl.: G05B 19/18, G05B 19/406

(54) **AUTOMATISIERTES VERFAHREN UND VERARBEITUNGSMODUL ZUM ÜBERWACHEN EINER CNC-GESTEUERTEN MEHRACHSMASCHINE**
AUTOMATED METHOD AND PROCESSING MODULE FOR MONITORING A CNC-CONTROLLED MULTI-AXIS MACHINE
PROCEDE AUTOMATISE ET MODULE DE TRAITEMENT DESTINES A SURVEILLER UNE MACHINE MULTI-AXIALE A COMMANDE CNC

(43) Veröffentlichungstag der Anmeldung: 17.05.2017
(73) Patentinhaber: Klingelnberg AG, 8050 Zürich (CH)
(72) Erfinder: Weber, Jürgen, 42499 Hückeswagen (DE); Ribbeck, Karl-Martin, 42897 Remscheid (DE); Frischtatzky, Rafael, 51429 Bergisch-Gladbach (DE)
(74) Vertreter: Janke Scholl Patentanwälte PartG mbB

(56) Entgegenhaltungen:
- EP-A1- 2 722 123
- DE-A1-102006 037 952
- GB-A- 2 149 551
- JP-A- H05 116 056
- US-A- 5 663 894
- US-A- 5 822 212
- US-A1- 2002 173 935
- US-B1- 6 205 371

## Beschreibung

### Gebiet der Erfindung

Gegenstand der Erfindung ist ein Verfahren zur automatisierten Überwachung einer CNC-gesteuerten Mehrachsmaschine. Insbesondere geht es um die Überwachung von CNC-gesteuerten Mehrachsmaschinen bei der Bearbeitung von verzahnten Bauteilen. Gegenstand der Erfindung ist ein Verarbeitungsmodul zur automatisierten Überwachung mindestens einer CNC-gesteuerten Mehrachsmaschine.

### Hintergrund der Erfindung, Stand der Technik

Das Dokument US 6 205 371 B1 beschreibt ein Verfahren zum Vermeiden von Schleifbrand durch Kraftmessung. Das Dokument JP H05 116056 beschreibt ein Verfahren zum Überwachen des Werkzeugverschleißes anhand einer Leistungsaufnahme der Werkzeugspindel. Das Dokument US 5 663 894 A beschreibt ein Verfahren zum Bestimmen der Steifigkeit bzw. des dynamischen Verhaltens einer Werkzeugmaschine. Die Genauigkeitsanforderungen an verzahnte Bauteile und die Präzision der entsprechenden Bearbeitungsmaschinen steigen stetig an. Bei der Bearbeitung einer Verzahnung in einer Bearbeitungsmaschine kommen meist bis zu sechs simultan arbeitende Achsen zum Einsatz. Die hohen Anforderungen führen dazu, dass solche Bearbeitungsmaschinen so ausgelegt werden und aufgebaut sein müssen, dass sie in der Lage sind mit allen beteiligten Achsen im 3-dimensionalenRaum extrem präzise Bewegungen auszuführen. Es sind hier teilweise mehrere Achsen übereinander angeordnet und der Aufbau entsprechender Bearbeitungsmaschinen ist daher komplex.

Da sich herstellungsbedingte Toleranzen ergeben können und da auch verschleißbedingte Veränderungen einzelner Komponenten in den hochkomplexen Bearbeitungsmaschinen auftreten können, besteht das Bestreben Einflüsse dieser Faktoren frühzeitig zu erkennen. Diese Einflüsse können nämlich zu einer von der Vorgabe abweichenden Maschinenbewegung und somit zur Beeinträchtigung der Qualität des bearbeiteten Bauteils führen. Insbesondere spielen heute diese Einflüsse auf das Geräuschverhalten von verzahnten Bauteilen beim Einsatz z.B. in einem Fahrzeuggetriebe eine immer wichtigere Rolle.

Bei der Fertigung von Verzahnungsbauteilen besteht die Besonderheit darin, dass die Achsen von Bearbeitungsmaschinen in einem fest vorgegebenen und nicht abänderbaren Raum der Maschine mit fest vorgegebenen Bewegungsabläufen absolut genau und reproduzierbar verfahrbar sein müssen. Die einzelnen Bewegungsabläufe sind für jede Bauteilausführung individuell und unterscheiden sich von Bauteil zu Bauteil zum Teil erheblich.

Es stellt sich in Anbetracht der obigen Ausführungen die folgende Aufgabe. Es geht darum einen Ansatz zu finden, der es ermöglicht die Bearbeitungsqualität von CNC-gesteuerten Bearbeitungsmaschinen weiter zu verbessern.

Gemäß Erfindung wird ein Verfahren zur Verfügung gestellt, dessen Merkmale dem Anspruch 1 zu entnehmen sind.

Gemäß Erfindung wird auch ein Verarbeitungsmodul zur Verfügung gestellt, dessen Merkmale dem Anspruch 5 zu entnehmen sind.

Bei der Bearbeitung einer Verzahnung bzw. von verzahnten Bauteilen sind fest vorgegebene und nicht abänderbare Bewegungen von bis zu sechs Achsen einer Bearbeitungsmaschine im Raum notwendig. Die Erfindung bezieht sich auf eine Methodik und ein (Bewertungs-)Verfahren zu einer präzisen und intelligenten Beschaffung technischer Information über das Maschinenverhalten während des Bearbeitens eines individuellen (Zahnrad-)Bauteils oder einer Serie von (Zahnrad-) Bauteilen.

Vorzugsweise werden bei allen Ausführungsformen die durch den Einsatz moderner Steuerungen realisierbaren Erfassungsmöglichkeiten unterschiedlicher Signale einer Bearbeitungsmaschine genutzt, um bestimmte Merkmale (hier generell kinetische Verhaltensmuster genannt) mindestens einer für einen Bearbeitungsvorgang in einer Bearbeitungsmaschine notwendigen Bewegung zu erfassen.

Eine solche Erfassung kann bei allen Ausführungsformen automatisiert erfolgen und sie kann bei allen Ausführungsformen auf bestimmte Bewegungselemente, Bewegungsabschnitte oder -profile aus einer Gesamtbewegung begrenzt sein.

Ziel ist es mit möglichst hoher Präzision bzw. Auflösung Signale zu erfassen, zu verarbeiten und dann abzuspeichern. Diese Signale können sehr unterschiedliche Informationen liefern. So können beispielsweise Weg-, Positions- oder Geschwindigkeitssignale in Form von Strom- und/oder Spannungssignalen von steuerungsinternen Sensormitteln abgegriffen werden. Es können aber auch Signale von externen Sensormitteln (d.h. von Sensormitteln, die nicht Teil einer Steuerung sind) verarbeitet werden.

Alle Ausführungsformen können auf interne Sensormittel und/oder auf externe Sensormittel der Bearbeitungsmaschine zugreifen. Dieser Zugriff kann über die Steuerung der Bearbeitungsmaschine oder an der Steuerung vorbei erfolgen.

Die Ansteuerung oder Auslösung der entsprechenden Signalerfassung kann bei allen Ausführungsformen direkt aus der Steuerung der Bearbeitungsmaschine heraus erfolgen. Die Ansteuerung oder Auslösung der entsprechenden Signalerfassung kann bei allen Ausführungsformen aber auch von extern - z.B. über ein Kommunikationsnetzwerk - erfolgen.

Wichtig ist eine simultane Erfassung der verfügbaren Signale, damit bei der anschließend durchzuführenden Verarbeitung dieser Signale eine zeitlich und/oder räumlich genaue Zuordnung erfolgen kann. Nur eine solche räumlich und/oder zeitlich genaue Zuordnung ermöglicht den gewünschten Vergleich mit den entsprechenden Signalen einer anderen Maschine oder derselben Maschine.

Mithilfe der maschineninternen Sensormittel und/oder mithilfe zusätzlicher Sensormittel können zahlreiche Signale einer Bearbeitungsmaschine während eines Bearbeitungsprozesses erfasst werden. Die Signale können bei allen Ausführungsformen sowohl für den gesamten Bearbeitungsprozess als auch für spezifische Teilbereiche (z.B. nur für bestimmte Achsen der Maschine) und/oder für bestimmte Bewegungselemente, Bewegungsabschnitte oder -profile eines Bearbeitungsprozesses erfasst werden.

So können durch den Einsatz der Erfindung auf diesem Weg z.B. variierende Bearbeitungsprozesse einer Bearbeitungsmaschine oder auch mehrerer Maschinen mit dem gleichen oder ähnlichen Bearbeitungsprozessen miteinander verglichen werden. Eine zeitsynchrone und/oder raum-bezogene Erfassung diverser Maschinensignale einiger oder aller Maschinenachsen während des gesamten Bearbeitungsprozesses oder im Leerlauf mit definierter Kinematik kann als kinematisches Verhaltensmuster der Kombination aus Maschine und Bearbeitungsprozess verstanden werden.

Zur detaillierten Analyse einzelner Maschinenkomponenten oder zur Analyse und Beurteilung einzelner Bearbeitungsabschnitte kann der Fokus der Erfassung und/oder Verarbeitung auf Teilbereiche eines Gesamtbearbeitungsprozesses (Bewegungselemente, Bewegungsabschnitte oder -profile) gelegt werden.

Erfindungsgemäß werden bei allen Ausführungsformen die Signale von identischen oder baugleichen Bearbeitungsmaschinen direkt oder indirekt miteinander in Bezug gesetzt und verglichen.

Erfindungsgemäß werden bei allen Ausführungsformen die Signale von identischen oder baugleichen Bearbeitungsmaschinen direkt oder indirekt miteinander in Bezug gesetzt und verglichen, die bei der Bearbeitung von Gleichteilen aufgezeichnet werden.

Die für die Bearbeitung eines verzahnten Bauteils vorgegebenen Bewegungen, respektive die entsprechenden Signale, werden erfindungsgemäß im realen (Bearbeitungs-)Prozess erfasst.

Das Resultat einer solchen Erfassung in einer Bearbeitungsmaschine kann als kinematisches Verhaltensmuster für eine bestimmte Bearbeitungsmaschine, für einen bestimmten Typ von Bearbeitungsmaschinen, oder für die Kombination einer bestimmten Bearbeitungsmaschine mit einem bestimmten verzahnten Bauteil gewertet werden.

Ergibt die Untersuchung eines kinematischen Verhaltensmusters eine positive Rückmeldung, so können die entsprechenden Signaldaten und/oder das entsprechende Verhaltensmuster als geprüftes Verhaltensmuster vorgemerkt, abgelegt oder gespeichert werden.

Vorzugsweise werden bei allen Ausführungsformen Signale herangezogen bzw. ausgewertet, welche während einer Bearbeitung eines Werkstücks mit einem exakt definierten Materialabtrag aufgezeichnet wurden. Dieser über dem gesamten Bearbeitungprozess exakte Materialabtrag kann durch einen zweistufigen Prozessablauf sichergestellt werden und ergibt sich aus der Differenz von einem ersten Schruppprozess und einem anschließenden Schlichtprozess am gleichen Bauteil.

Ist einmalig ein geprüftes Verhaltensmuster einer für gut befundenen Bearbeitungsmaschine für ein bestimmtes Bauteil erstellt, so lassen sich die Verhaltensmuster weiterer identischer oder baugleicher Bearbeitungsmaschinen oder dergleichen Maschine zu anderen Zeitpunkten mit dieser Referenz vergleichen.

Die geprüften Verhaltensmuster können z.B. für eine Zustandsüberwachung von bei Kunden installierten Bearbeitungsmaschinen herangezogen werden. Es können Signale von unterschiedlichen Zuständen verglichen werden und durch Definition von Grenzwerten können entsprechende Maßnahmen eingeleitet werden, falls sich z.B. Indizien für einen Verschleiß zeigen.

Optional ist eine Fernabfrage der ermittelten (Mess-)Ergebnisse möglich und es kann durch den Einsatz der Erfindung eine vorausschauende Serviceunterstützung angeboten werden.

Falls die Produktpalette eines Endanwenders bekannt ist, so kann durch den Einsatz der Erfindung bereits im Herstellerwerk der Bearbeitungsmaschinen eine Analyse der Bewegungen der Maschine erfolgen. Diese Analyse kann dann in Form eines kinematischen (Referenz-)Verhaltensmusters abgespeichert und später wiederverwendet werden.

In der Inbetriebnahmephase einer Bearbeitungsmaschine kann durch den Einsatz der Erfindung und durch eine intelligente Auswahl von Prüfverzahnungen eine verlässliche Montage- und Funktionsüberwachung realisiert werden.

Weitere bevorzugte Ausführungsformen sind den jeweiligen Unteransprüchen zu entnehmen.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1**: zeigt in einer schematischen Darstellung die Nachbearbeitung (Hartfeinbearbeitung) eines Zylinderrad-Werkstücks, wobei die Details einer entsprechenden Bearbeitungsmaschine ausgeblendet wurden;
- **FIG. 2A**: zeigt ein schematisches Diagramm, das beispielhaft die Stromzufuhr eines Antriebsmotors einer Bearbeitungsmaschine als Funktion des Spanvolumens während der Bearbeitung von fünf Zähnen eines Bauteils darstellt;
- **FIG. 2B**: zeigt ein schematisches Diagramm, das beispielhaft die Stromzufuhr eines Antriebsmotors einer Bearbeitungsmaschine als Funktion des Spanvolumens während der Bearbeitung von fünf Zähnen eines Bauteils darstellt, wobei ab der Bearbeitung der dritten Zahnlücke die Stromzufuhr deutlich hochgefahren wurde, um ein Problem mit dem Schleifwerkzeug auszugleichen;
- **FIG. 2C**: zeigt ein schematisches Diagramm, das beispielhaft eine Kurvenschar der Stromzufuhr als Funktion des Spanvolumens zeigt;
- **FIG. 3**: zeigt ein schematisches Diagramm, das beispielhaft ein Signal s(t) als Funktion der Zeit darstellt;
- **FIG. 4**: zeigt ein Blockdiagramm, das grundlegende Aspekte eines Verfahrens der Erfindung darstellt;
- **FIG. 5A**: zeigt eine beispielhafte CNC-Maschine, die zum Bearbeiten von verzahnten Bauteilen ausgelegt ist;
- **FIG. 5B**: zeigt eine weitere beispielhafte CNC-Maschine, die zum Bearbeiten von verzahnten Bauteilen ausgelegt ist;
- **FIG. 6A-6E**: zeigen Diagramme von fünf Achsen einer CNC-Maschine nach Fig. 5A oder 5B, wobei die Diagramme (zeitsynchron) übereinander angeordnet sind;
- **FIG. 7A**: zeigt das Abweichungssignal zA einer ersten Prozessvariante PA;
- **FIG. 7B**: zeigt die Soll-Werte zS der ersten Prozessvariante PA der Fig. 7A für die Z-Achse über eine Anzahl von Messpunkten MP aufgetragen;
- **FIG. 7C**: zeigt das FFT-Spektrum des Abweichungssignals zA der Fig. 7A;
- **FIG. 8A**: zeigt das Abweichungssignal zB einer ersten Prozessvariante PB;
- **FIG. 8B**: zeigt die Soll-Werte zS der ersten Prozessvariante PB der Fig. 8A für die Z-Achse über eine Anzahl von Messpunkten MP aufgetragen;
- **FIG. 8C**: zeigt das FFT-Spektrum des Abweichungssignals zB der Fig. 8A;

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

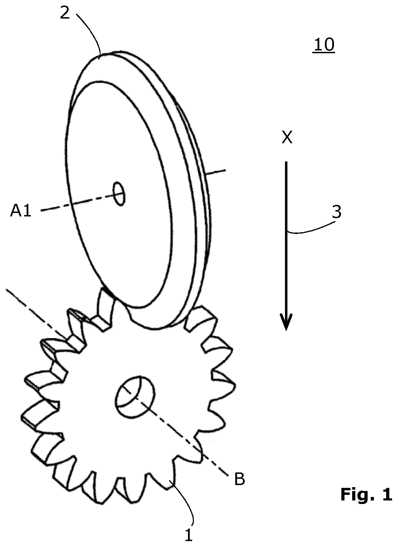

Es wird im Folgenden die Nachbearbeitung (Hartfeinbearbeitung) eines Zylinderrad-Werkstücks 1 beschrieben, dessen Zahnlücken bereits in vorausgehenden Bearbeitungsschritten gefertigt wurden. Dabei wird unter anderem auf die Fig. 1 Bezug genommen. Es geht bei diesem Beispiel um das sogenannte Zahnrad-Profilschleifen eines Zylinderrad-Werkstücks 1. Das Zahnrad-Profilschleifen ist ein diskontinuierliches Schleifverfahren, bei dem Lücke für Lücke eines Werkstücks 1 mit einem Schleifwerkzeug 2 bearbeitet wird. Das Profil des Schleifwerkzeugs 2 entspricht genau dem Fertigprofil der Verzahnung, die an dem Werkstück 1 bearbeitet werden soll. Das Profil der Schleifscheibe, die hier als Werkzeug 2 dient, hat im vorliegenden Beispiel eine Evolventenform. Diese Form wird entsprechend in die Zahnlücken des Werkstücks 1 übertragen. Das Zahnrad-Profilschleifen wird in diesem Fall durch das vertikale Einfahren der Schleifscheibe 2 in eine Zahnlücke bestimmt. Bei einer Konstellation nach Fig. 1 wird dieses vertikale Einfahren der Schleifscheibe 2 primär durch eine Bewegung der X-Achse (als radiale Bewegung) und durch eine Bewegung in Zahnbreitenrichtung (parallel zur B-Achse) erzeugt (wenn man von den vorausgehenden Zustellbewegungen absieht). Die Drehung um A1 erzeugt die Schnittgeschwindigkeit. Die entsprechende Relativbewegung parallel zur X-Achse ist in Fig. 1 durch einen Pfeil 3 angedeutet. Das vertikale Einfahren parallel zur X-Achse erfolgt radial zu dem Werkstück 1. Nach jeder fertigen Lücke erfolgt eine Drehung um B, um jeweils den Winkel einer Teilung.

Es ist bekannt, dass man die Stromaufnahme an der Maschine 10 zum Zwecke einer Prozessverfolgung aufzeichnen und auswerten kann. An der konkreten Stromaufnahme lässt sich erkennen, wie die Schleifscheibe 2 arbeitet. Arbeitet die Schleifscheibe 2 konstant, so kann sie mit einer konstanten Stromaufnahme betrieben werden. Verschleißt die Schleifscheibe 2, so muss die Stromaufnahme angehoben werden, um ein gleichbleibendes Spanvolumen VS pro Zeit zu erzielen. D.h. man muss den Rotationsantrieb der A1-Achse mit mehr Strom betreiben als bei einer neuen, unverschlissenen Schleifscheibe 2. Ein gewisser Verschleiß ist in der Praxis normal und daher wird typischerweise der Strom I(SV) bezogen auf das Spanvolumen SV stetig angehoben. Daher bewegt sich die Stromaufnahme zwischen zwei Abrichtzyklen leicht linear nach oben falls das Zahnrad-Profilschleifen ansonsten stabil verläuft.

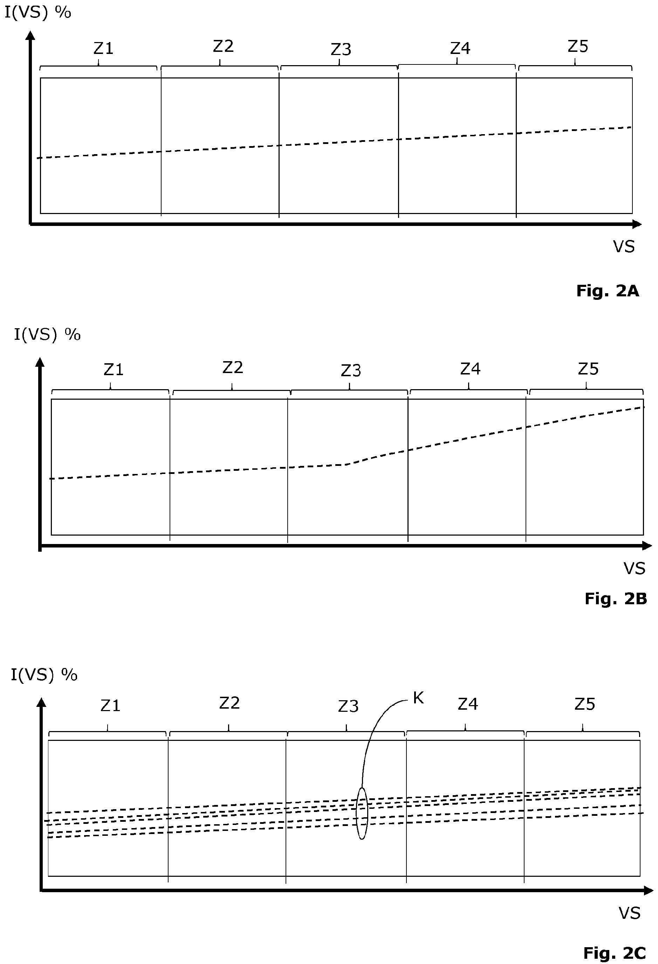

In Fig. 2A ist dieser Zusammenhang anhand eines Beispiels in vereinfachter Form dargestellt. Das Diagramm der Fig. 2A zeigt den Verlauf der Stromaufnahme I(VS) in Prozent aufgetragen über das Spanvolumen VS. Das Diagramm ist in fünf Blöcke unterteilt, wobei jeder Block einer Zahnlücke zugeordnet ist. D.h. man sieht hier den Anstieg der Stromaufnahme I(VS) bei der Bearbeitung von fünf Zahnlücken Z1 bis Z5. Der Verlauf der Stromaufnahme I(VS) wurde hier mathematisch geglättet, um zeigen zu können, dass sich im Wesentlichen ein monotoner Anstieg der Stromaufnahme I(VS) mit zunehmendem Verschleiß des Schleifwerkzeugs 2 ergibt.

In Fig. 2B ist dargestellt was passiert, wenn die Schleifscheibe 2 einbricht. Hier passiert dieses Ereignis beim Bearbeiten der 3. Zahnlücke Z3. Sobald die Schleifscheibe 2 einbricht, muss die prozentuale Stromaufnahme I(VS) erhöht werden. Auch diese Darstellung wurde schematisiert.

Gemäß Erfindung geht es jedoch nicht um eine Echtzeitüberwachung von derartigen Veränderungen. Es geht vielmehr um das Ermitteln von Verhaltensmustern VM einer Maschine 10, die optimal arbeitet. Der Kurvenverlauf der Fig. 2A kann hier als einfaches Beispiel angesehen werden. Wenn man nun das Verhaltensmuster VM der Maschine 10 bei jedem Schleifvorgang oder von Zeit zu Zeit erfasst und aufzeichnet, dann kann sich beispielsweise eine Kurvenschar K ergeben, wie in Fig. 2C gezeigt. Alle Kurven dieser Kurvenschar K haben mehr oder weniger einen vergleichbaren Verlauf, abgesehen von etwas unterschiedlichen Stromstärken am Anfang und von leicht abweichenden Steigungen.

Eine solche Kurvenschar K, oder die Parameter, welche diese Kurvenschar K charakterisieren, werden gemäß Erfindung als sogenanntes kinematisches Verhaltensmuster VM der Maschine 10 gespeichert. Im Folgenden wird das kinematische Verhaltensmuster VM einer ersten Maschine 10.1 mit VM10.1 bezeichnet. Das Verhaltensmuster VM einer zweiten baugleichen Maschine 10.2 wird mit VM10.2 bezeichnet.

Gemäß Erfindung werden die Verhaltensmuster VM10.1 und VM10.2 verglichen, um ein ungewöhnliches Verhalten einer Maschine (vorzeitig) erkennen zu können. Solange die zweite baugleiche Maschine 10.2 ein ähnliches Verhaltensmuster zeigt (d.h. falls gilt: VM10.1 ≈ VM10.2), ist davon auszugehen, dass diese zweite Maschine 10.2 auch die gewünschten Bearbeitungsergebnisse produziert. Zeigen sich bei einem Vergleich Abweichungen, so können Maßnahmen ergriffen werden.

Bevor weitere Ausführungsbeispiele und Details beschrieben werden, sind einige Begriffe zu definieren.

Ein kinematisches Verhaltensmuster VM im Sinne der Erfindung hat stets einen Bezug zu der Zeit t und/oder zu einer Position im 3-dimensionalen Raum (z.B. als Bezug zu einer Wegstrecke Δx der Linear-Achse X definiert). Dieser zeitliche und/oder räumliche Bezug ist erforderlich, um das Verhaltensmuster VM10.1 einer Maschine 10.1 mit dem Verhaltensmuster VM10.2 einer anderen Maschine 10.2 vergleichen zu können. Es gibt daher bei allen Ausführungsformen einen zeitlichen und/oder räumlichen Bezug. Dieser Bezug muss sich jedoch nicht zwingend in einer direkten Zeit- oder Raumabhängigkeit ausdrücken. Die entsprechende Abhängigkeit kann z.B. bei allen Ausführungsformen auch in einer anderen physikalisch-technischen Größe enthalten sein. Im Spanvolumen VS ist z.B. über das Maß des Volumens eine räumliche Komponente enthalten. Das Spanvolumen VS pro Zeiteinheit ist eine Volumenangabe, die auf die Zeit t bezogen ist. D.h. beim Spanvolumen pro Zeiteinheit sind räumliche und zeitliche Komponenten enthalten. Eine Zeitabhängigkeit kann z.B. auch im Frequenzspektrum (nach einer Fourier-Transformation) enthalten sein.

Die Verhaltensmuster VM werden gemäß Erfindung unter Zuhilfenahme technischer Mittel erfasst und aufgezeichnet. Dies geschieht bei allen Ausführungsformen mit sogenannten Sensormitteln 20, die Bestandteil einer Maschine 10 sind, oder die einer Maschine 10 zugeordnet sind.

Der Begriff Sensormittel 20 ist hier breit zu verstehen. Es gehören z.B. auch Mittel dazu, welche dazu ausgelegt sind die Stromaufnahme eines Antriebsmotors der Maschine 10 zu erfassen. Unter anderem gehören aber auch Vibrationssensoren, Beschleunigungsgeber, (Winkel-)Encoder, Decoder, akustische Sensoren, Weggeber, CCD-Kameras, optische Sensoren und dergleichen dazu.

Die Sensormittel 20 dienen dazu sogenannte Kinematik-Information zu erfassen, bzw. Signale abzugeben oder bereitzustellen, die mit kinematischen Größen einer Maschine 10 in Bezug stehen.

Ein Großteil der erfindungswesentlichen Bearbeitungsschritte erfolgt in einem digitalen Umfeld. D.h. die Signale bzw. die Kinematik-Information, die von Sensormitteln 20 geliefert werden, werden umgesetzt in digitale Größen (z.B. durch eine analog-digital Wandlung). Dabei können Kurven (wie z.B. die einzelnen Kurven der Kurvenschar K in Fig. 2C) z.B. durch numerische Gleichungen ausgedrückt werden. Es ist aber auch möglich die einzelnen Kurven z.B. durch Parameter zu definieren. Wichtig ist, dass beim Umwandeln von analogen Signalen in digitale Größen keine wichtige Information verloren geht. Die Charakteristika einer Kurve müssen erhalten bleiben, da die Charakteristika Gegenstand der Vergleichsoperationen der Erfindung sind. Die Kinematik-Information, die durch Sensormittel 20 geliefert wurde, soll auch im digitalen Regime weiterhin enthalten oder erkennbar sein.

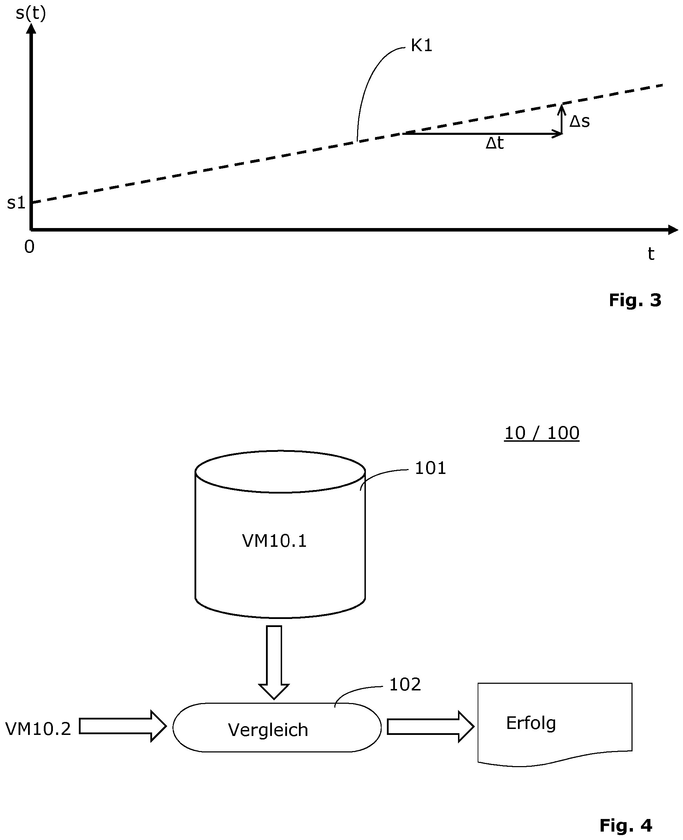

Anhand der Fig. 3 wird nun ein einfaches Beispiel für das Ermitteln von Parametern beschrieben. Diese Parameter dienen zur Definition einer ersten beispielhaften Kurve K1, die hier einer Geraden mit monotoner Steigung m entspricht. Es handelt sich hier z.B. um das Signal s(t) eines Weggebers aufgetragen über die Zeit t. Dieses Signal s(t) wird aufgezeichnet während sich eine Linearachse einer Maschine 10 mit konstanter Geschwindigkeit bewegt. Die Steigung m ist wie folgt definiert: m = Δs/Δt.

Die Kurve K1 schneidet die s(t)-Achse am Punkt 0, s1. Der Wert s1 ist ein weiterer Parameter, der die Gerade mit monotoner Steigung beschreibt. Anhand der beiden Parameter m und s1 kann die Gerade wie folgt eindeutig definiert werden: s(t) = s1 + m t

Entsprechend kann auch eine Kurvenschar K parametrisiert werden, ohne wichtige Informationen zu verlieren. Als Kurvenschar K wird hier die Menge von Kurven bezeichnet, deren Abbildungsvorschriften einander ähneln. Diese Definition ist etwas vage. Daher kann gemäß Erfindung die Zugehörigkeit einer Kurve zu einer Kurvenschar rechnerisch z.B. durch das Anwenden eines Regelsatzes geprüft werden. Ein solcher Regelsatz kann bei allen Ausführungsformen beispielsweise wie folgt aussehen:

| | |
|---|---|
| B1: | Die Steigung m der zu untersuchenden Kurve K1 muss im Bereich zwischen 0,5 und 1 liegen (d.h. 0,5 < m < 1); |
| B2: | Der Schnittpunkt mit der s(t) Achse muss im Bereich zwischen 0 und 2 liegen (d.h. 0 < m < 2); |

Falls eine zu untersuchende Kurve K1 beide Bedingungen B1 und B2 erfüllt. So gehört sie zu der Kurvenschar.

Es liegt auf der Hand, dass es sich hier um Beispiele handelt. Die Zugehörigkeit zu einer Kurvenschar K kann z.B. auch durch das Prüfen von Toleranzwerten ermittelt werden. So kann als Bedingung B1 z.B. auch postuliert werden, dass m einer zu untersuchenden Kurve K1 im Toleranzfenster m ± 10% liegen muss.

In der Praxis sind die Kurven, die zu untersuchen und zu vergleichen sind, meistens komplizierter als in den bisherigen Beispielen. So hat das Signal s(t) eines Vibrationssensors z.B. einen zeitlich kaum auflösbaren Schwingungsanteil und eventuell spezifische Ausschläge. Bei dem Signal s(t) eines Vibrationssensors handelt es sich nämlich um ein ereigniskorreliertes Signal. Das Digitalisieren von Signalen, die komplexer sind, umfasst vorzugsweise die folgenden beiden Schritte:
S1: Das Abtasten (Sampling genannt) des analogen Signals s(t) entlang der Zeitachse t. Auf diesem Weg wird das Signal s(t) diskretisiert;
S2: Die als Quantisierung bekannte Umsetzung der Signalamplituden des Signals s(t) in diskrete Werte auf der s(t) Skala oder Achse.

Diese Schritte S1 und S2 werden typischerweise bei allen Ausführungsformen im Rahmen einer Analog-Digital-Wandlung durchgeführt. Bei der Wahl eines geeigneten Analog-Digital-Wandlers spielen dabei die Auflösung (z.B. 16 Bit) und die Abtastrate eine Rolle. Die Abtastrate gibt die Anzahl der Abtastungen des Signals s(t) entlang der Zeitachse t pro Sekunde an. Je höher die Abtastrate, desto genauer wird das Signal s(t) rechnerisch in der Maschine 10 oder in einem Verarbeitungsmodul 100 abgebildet. Die Regeln zur Wahl eines geeigneten Analog-Digital-Wandlers sind dem Nachrichten- und Messtechniker hinreichend bekannt und werden hier nicht vertieft.

Es ist bekannt, dass sich periodische Signale s(t) meist einfacher analysieren lassen, wenn Sie statt im Zeitbereich im Frequenzbereich betrachtet werden. Aus diesem Grunde kann bei allen Ausführungsformen ein Signal s(t) im Rahmen der Verarbeitung in ein Frequenzspektrum umgewandelt und dort z.B. mit dem Frequenzspektrum anderer Signale verglichen werden. Die Zerlegung kann bei allen Ausführungsformen z.B. mittels einer geeigneten Fourier-Transformation erfolgen. Auch diese Aspekte sind hinreichend bekannt und werden hier nicht vertieft.

Anhand der Fig. 4 wird nun ein einfaches Beispiel für das Grundprinzip der Erfindung beschrieben. Das Verfahren der Fig. 4, bzw. Abwandlungen oder Anpassungen dieses Verfahrens können bei allen Ausführungsformen in einer Maschine 10 oder in einem Verarbeitungsmodul 100 implementiert sein.

Bei dem Beispiel der Fig. 4 wird das aktuelle Verhaltensmuster VM10.2 einer Maschine 10.2 mit einem zuvor gespeicherten Verhaltensmuster VM10.1 einer baugleichen Maschine 10.1 verglichen. Das Verhaltensmuster VM10.1 kann z.B. in einer Datenbank 101 gespeichert sein. Die Datenbank 101 kann bei allen Ausführungsformen in einer Maschine 10 oder in einem Verarbeitungsmodul 100 implementiert sein. Die Datenbank 101 kann aber bei allen Ausführungsformen z.B. auch über ein internes oder externes Kommunikationsnetzwerk mit der Maschine 10 oder mit dem Verarbeitungsmodul 100 verbindbar sein.

Das Vergleichen der beiden Verhaltensmuster VM10.1 mit VM10.2 ist ein zentraler Schritt, der hier mit dem Bezugszeichen 102 versehen ist. Bei einem einfachen Signal s(t) (wie beispielsweise in Fig. 3 gezeigt), kann der Vergleich sich auf das Vergleichen der Steigung m und des Wertes s1 beschränken. Es können hier z.B. im Rahmen des Vergleichens 102 die beiden Bedingungen B1 und B2 angewendet werden. Wenn beide Bedingungen B1 und B2 erfüllt sind, dann wird ein Erfolg gemeldet. Erfolg heißt in diesem Zusammenhang, dass sich die Maschine 10.2 ähnlich verhält wie die Maschine 10.1. Man geht hier von einem nicht auffälligen Verhalten aus. Falls eine oder beide Bedingungen B1 und B2 nicht erfüllt sind, so kann beispielsweise eine Reaktion ausgelöst werden.

Bei komplexeren Signalen kann der Vergleich 102 entsprechend aufwendiger sein.

Im Rahmen des Vergleichs 102 werden die zu vergleichenden Signale oder deren Parameter oder deren Frequenzspektrum miteinander in Bezug gesetzt. Das Inbezugsetzen erfolgt bei allen Ausführungsformen vorzugsweise dadurch, dass beide zu vergleichende Signale oder deren Parameter auf der Zeitachse (bzw. deren Frequenzspektrum im Frequenzbereich) und/oder im 3-dimensionalen Raum miteinander zur Deckung gebracht werden. Erst nach diesem Inbezugsetzen erfolgt bei allen Ausführungsformen vorzugsweise dann der eigentliche Vergleich. Im Rahmen des Inbezugsetzens können die Signale bei allen Ausführungsformen z.B. auch normiert werden, damit sie direkt miteinander verglichen werden können.

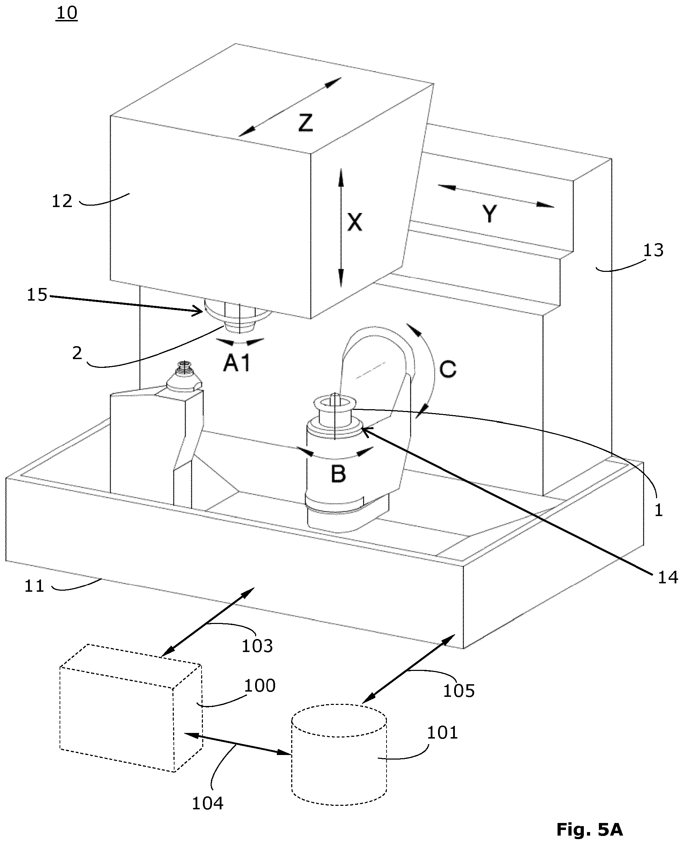

Im Folgenden wird anhand eines Beispiels eine weitere Ausführungsform der Erfindung beschrieben. Es geht hier um das schleifende Bearbeiten eines Werkstücks 1 mit einem Schleifwerkzeug 2, das in einer Maschine gemäß Fig. 5A durchgeführt wird.

In Fig. 5A ist eine Bearbeitungsmaschine 10 gezeigt, die ein Maschinenbett 11 und einen Werkzeugschlitten 12 umfasst, der entlang eines Turmes 13 verschiebbar ist. Die Maschine 10 umfasst eine Werkstückspindel 14 zur Aufnahme eines Werkstücks 1 und eine Werkzeugspindel 15 zur Aufnahme eines Schleifwerkzeugs 2. Die Werkstückspindel 14 ist über eine Schwenkachse C schwenkbar an dem Turm 13 gelagert. Die Werkzeugspindel 15 ist in einer hängenden Konstellation an dem Werkzeugschlitten 12 angeordnet. Drei Linearachsen X, Y und Z dienen der relativen Bewegbarkeit des Schleifwerkzeugs 2 gegenüber dem Werkstück 1.

Das Verfahren der Erfindung kann bei allen Ausführungsformen in einer Steuerung der Maschine 10 und/oder in einem speziellen Verarbeitungsmodul 100 durchgeführt werden. In Fig. 5A ist ein Verarbeitungsmodul 100 als optionales Element gezeigt. Es kann über eine Kommunikationsverbindung oder über einen Bus 103 mit der Steuerung der Maschine 10 verbindbar sein. Der Speicher bzw. die Datenbank 101 kann optional über eine Kommunikationsverbindung oder über einen Bus 104 mit dem Verarbeitungsmodul 100 und/oder über eine Kommunikationsverbindung oder über einen Bus 105 mit der Steuerung der Maschine 10 verbindbar sein.

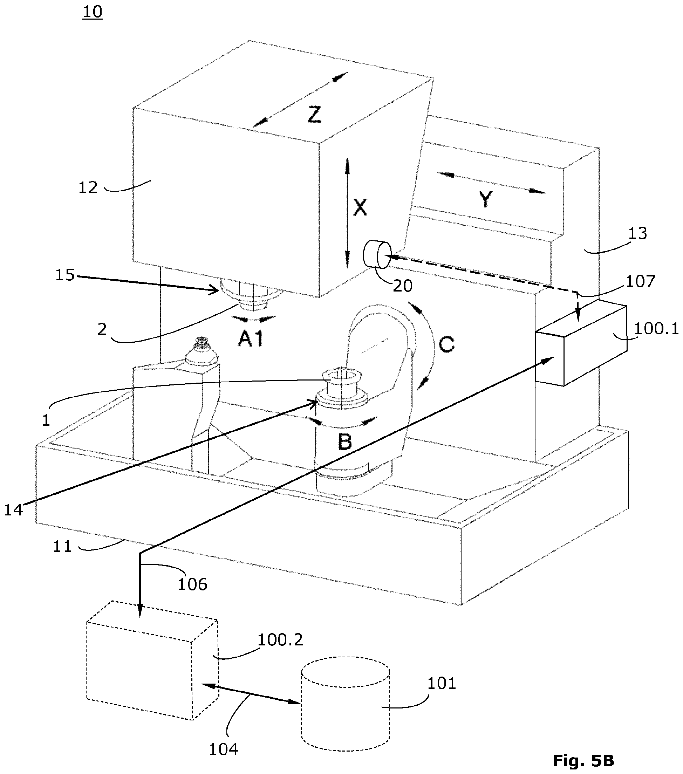

In Fig. 5B ist eine weitere Bearbeitungsmaschine 10 gezeigt, die vom grundlegenden Aufbau her der Maschine 10 der Fig. 5A entspricht. Anders als in Fig. 5A, umfasst die Bearbeitungsmaschine 10 der Fig. 5B ein Verarbeitungsmodul 100, das in zwei Module oder Teile 100.1 und 100.2 unterteilt ist. Ein erstes Modul oder Teil 100.1 ist direkt an der Bearbeitungsmaschine 10 oder im unmittelbaren Umfeld der Bearbeitungsmaschine 10 angeordnet. Dieses erste Modul oder Teil 100.1 ist primär dazu ausgelegt die Signale oder Informationen von Sensormitteln 20 (vor-)zu verarbeiten. In Fig. 5B ist beispielhaft ein externes Sensormittel 20 gezeigt, das an dem Werkzeugschlitten 12 angebracht ist. Dieses Sensormittel 20, wie auch alle anderen Sensormittel 20 der Bearbeitungsmaschine 10, können über entsprechende Kommunikationsverbindungen oder über einen Bus 107 mit dem ersten Modul oder Teil 100.1 verbunden sein. Diese Verbindung 107 ist in Fig. 5B lediglich schematisch dargestellt.

Das erste Modul oder Teil 100.1 steht wiederum mit dem zweiten Modul oder Teil 100.2 in Kommunikationsverbindung, wie in Fig. 5B schematisch durch die Kommunikationsverbindung oder den Bus 106 dargestellt. Das zweite Modul oder Teil 100.2 kann im Umfeld der Bearbeitungsmaschine 10 oder auf demselben Firmengelände angeordnet sein. Vorzugsweise handelt es sich bei der Kommunikationsverbindung 106 um eine Fernverbindung (z.B. über das Internet) und das zweite Modul oder Teil 100.2 befindet sich an einem andern Standort (z.B. bei einem Anbieter von Auswerte-Dienstleistungen).

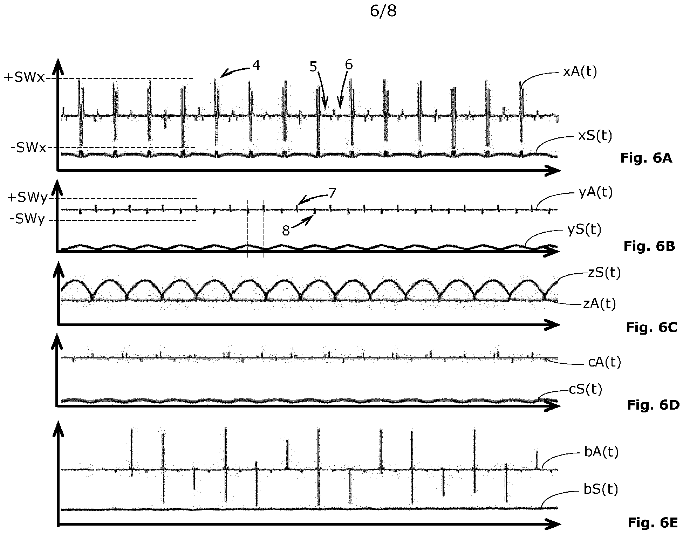

Beim schleifenden Bearbeiten des Werkstücks 1 mit dem Schleifwerkzeug 2 werden in präzise koordinierter Art und Weise mehrere Achsbewegungen ausgeführt. In den Figuren 6A bis 6E sind die entsprechenden Bewegungen grafisch dargestellt. Es handelt sich auch bei dieser Darstellung um eine schematisierte Darstellung, um die Aspekte der Erfindung besser hervorheben zu können. Die einzelnen Achsbewegungen wurden zeitsynchron erfasst und sind hier als sogenannte Achssignale dargestellt.

In Fig. 6A bis 6E sind insgesamt fünf Diagramme von fünf Achsen (zeitsynchron) übereinander angeordnet. Für jede dieser fünf Achsen gibt es jeweils ein Soll-Signal und ein Abweichungssignal. In Fig. 6A sind das Soll-Signal xS(t) und das Abweichungssignal xA(t) der X-Achse, in Fig. 6B das Soll-Signal yS(t) und das Abweichungssignal yA(t) der Y-Achse, in Fig. 6C das Soll-Signal zS(t) und das Abweichungssignal zA(t) der Z-Achse, in Fig. 6D das Soll-Signal cS(t) und das Abweichungssignal cA(t) der C-Achse und in Fig. 6E sind das Soll-Signal bS(t) und das Abweichungssignal bA(t) der B-Achse der Maschine 10 der Fig. 5A gezeigt. Die Soll-Signale weisen eine dickere Strichstärke auf als die Abweichungssignale.

Es ist zu beachten, dass die Soll-Signale und die Abweichungssignale nicht mit demselben Amplituden-Maßstab dargestellt sind. Die Abweichungssignale ergeben sich beispielsweise aus Unsteifigkeiten einzelner Achskonstellationen und können als Bewegungsabweichungen oder auch als Ungenauigkeiten verstanden werden.

Bei der schleifenden Bearbeitung des Werkstücks 1 geht es in der gezeigten Bearbeitungsphase um eine wälzende Bearbeitung der 15 Zahnlücken eines Kegelradwerkstücks 1. Konkret handelt es sich um einen Doppelwälzprozess, der hier durchgeführt wird. Es werden zur Erzeugung der endgültigen Zahnflanken am Werkstück 1 zwei Bewegungen in Form einer Schruppbewegung und einer Schlichtbewegung mit einem definierten Materialabtrag zwischen diesen beiden Prozessen durchgeführt.

An dem Beispiel der X-Achse ist in Fig. 6A die Ausprägung des Abweichungssignals xA(t) für die X-Achse für das zu bearbeitende Werkstück 1 und den gewählten Bearbeitungsprozess gezeigt. Erhöhte Abweichungen in dem Abweichungssignal gegenüber dem Soll-Signal der Fig. 6A haben ihren Ursprung z.B. in Eilgangbewegungen der X-Achse.

Anhand der jeweiligen Soll-Signale erfolgt die Zuordnung der Abweichungssignale zu den Achsbewegungen des Bearbeitungsprozess. So sind z.B. die fünfzehn einzelnen Zahnlücken während der Bearbeitung im Soll-Signal zS(t) der Z-Achse deutlich zu erkennen (siehe Fig. 6C). In Fig. 6A z.B. entsprechen die großen Signalausschläge des Abweichungssignals xA(t) Bewegungen der X-Achse, die im Eilgang ausgeführt werden. Einer dieser Signalausschläge ist in Fig. 6A mit dem Bezugszeichen 4 gekennzeichnet. Anhand des Abweichungssignals xA(t) kann man z.B. auch die Phasen des Schruppwälzens 5 und der Schlichtwälzens 6 erkennen.

Die Erfassung mehrerer zeitsynchroner Maschinensignale (beim vorliegenden Ausführungsbeispiel werden die Soll-Signal und die korrespondierenden Abweichungssignal von fünf Achsen erfasst) für den gesamten Bearbeitungsprozess oder für einen Teil desselben, wie in Fig. 6A - 6E anhand eines Beispiels gezeigt, kann zur Ableitung oder Gewinnung des kinematischen Verhaltensmusters eines spezifischen Bearbeitungsprozesses auf einer spezifischen Bearbeitungsmaschine 10 angesehen werden.

Es können nun bei dieser Ausführungsform im Rahmen des Vergleichs 102 Regeln angewendet werden, wie im Folgenden anhand eines Beispiels erläutert wird. Durch das Anwenden eines entsprechenden Regelsatzes lässt sich gemäß Erfindung z.B. prüfen, ob dieselbe Maschine 10 sich auch bei zukünftigen Bearbeitungsprozessen vergleichbar (innerhalb von Toleranzen) verhält. Es kann aber auch durch das Anwenden des entsprechenden Regelsatzes geprüft werden, ob sich eine zweite ähnliche oder baugleiche Maschine 10.2 so verhält wie eine erste Maschine 10.1.

Ein solcher Regelsatz kann bei allen Ausführungsformen für einen Doppelwälzprozess ähnlicher oder baugleicher Werkstücke 1 beispielsweise wie folgt aussehen:

| | |
|---|---|
| B3: | Der Verlauf des Abweichungssignals xA(t) für die X-Achse ist während des Schruppwälzens 5 und des Schlichtwälzens 6 im Wesentlichen horizontal; |
| B4: | Der Verlauf des Abweichungssignals xA(t) für die X-Achse zeigt im Eilgang deutliche Signalausschläge 4, deren Amplitude z.B. kleiner ist als ein Schwellwert von ±SWx (das entsprechende Schwellwert-Fenster ist in Fig. 6A eingezeichnet); |
| B5: | Der Verlauf des Abweichungssignals yA(t) zeigt für die Y-Achse während des Schruppwälzens 5, des Schlichtwälzens 6 und während des Ausführens von Bewegungen der X-Achse im Eilgang Signalausschläge 7 ins Positive und Negative, deren Amplitude z.B. kleiner ist als ein Schwellwert von ±SWy (das entsprechende Schwellwert-Fenster ist in Fig. 6B eingezeichnet); |
| B6: | Der Verlauf des Abweichungssignals yA(t) zeigt für die Y-Achse während des Schruppwälzens 5, des Schlichtwälzens 6 und während des Ausführens von Bewegungen der X-Achse im Eilgang abwechselnd Signalausschläge 7 ins Positive und Signalausschläge 8 ins Negative, deren Minima und Maxima synchron verlaufen zum Soll-Signal yS(t) (in Fig. 6B sind zwei gestrichelte Vertikallinien eingezeichnet, um zu zeigen, dass das Maximum des Soll-Signals yS(t) mit einem negativen Signalausschlag des Abweichungssignals yA(t) und dass das Minimum des Soll-Signals yS(t) mit einem positiven Signalausschlag des Abweichungssignals yA(t) zusammenfällt); |
| B7: | Der Verlauf des Abweichungssignals zA(t) zeigt für die Z-Achse während des Schruppwälzens 5, des Schlichtwälzens 6 und während des Ausführens von Bewegungen der X-Achse im Eilgang nur sehr geringe Ausschläge; |
| B8: | Der Verlauf des Abweichungssignals cA(t) zeigt für die C-Achse während des Schruppwälzens 5, des Schlichtwälzens 6 und während des Ausführens von Bewegungen der X-Achse im Eilgang nur sehr geringe Ausschläge. |

Es ist hier anzumerken, dass für die Bewegungen der B-Achse hier keine Regel aufgestellt wurde. Außerdem ist festzuhalten, dass die Diagramme der Figuren 6A - 6E Bewegungen im Zeitregime zeigen. Es handelt sich hier also um analoge Signale, die erfasst, verarbeitet (z.B. mittels Filtern und Verstärkern) und verglichen (z.B. mittels Komparatoren) werden. Der schaltungstechnische Aufwand ist relativ groß.

Um den schaltungstechnischen Aufwand zu reduzieren, können die analogen Signale z.B. bei allen Ausführungsformen auch in quantisierte, wertdiskrete Signale umgewandelt werden, bevor sie dann als Verhaltensmuster gespeichert und/oder miteinander verglichen werden.

Falls ein zu untersuchendes kinematisches Verhaltensmuster alle Bedingungen B3 bis B8 erfüllt, so wird dieser Vergleich als erfolgreich eingestuft und das Verhaltensmuster wird für OK befunden.

Die Regeln können auch anders formuliert und/oder kombiniert werden. Bei den Regeln B3 - B8 wurde kein Bezug zu der Zähnezahl des zu bearbeitenden Werkstücks 1 hergestellt. Es ist aber z.B. gemäß Erfindung auch möglich einen Teil der Abweichungssignale jeweils z.B. für einen ersten Zahn als kinematisches Verhaltensmuster zu erfassen, um dann die Abweichungssignale nachfolgender Zähne mit diesem Verhaltensmuster zu vergleichen.

Anhand eines weiteren Beispiels wird nun gezeigt, dass man auch das Verhaltensmuster einer ersten Prozessvariante PA mit dem Verhaltensmuster einer zweiten Prozessvariante PB vergleichen kann.

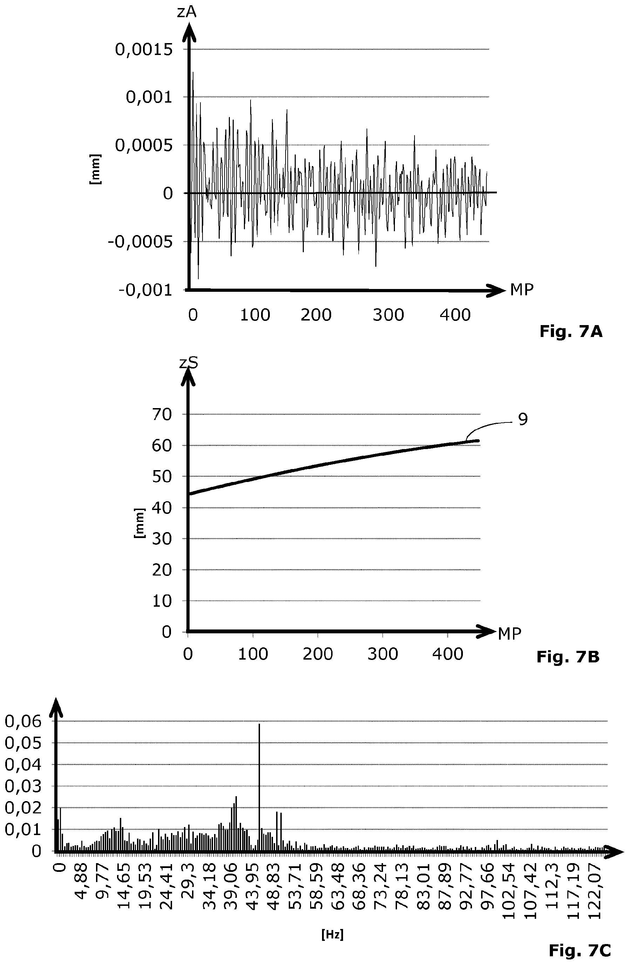

In der Fig. 7B sind die Soll-Werte zS der ersten Prozessvariante PA für die Z-Achse über eine Anzahl von Messpunkten MP aufgetragen. Die Kurve 9, die sich aus diesen Messpunkten MP ergibt, hat einen monoton steigenden Verlauf mit einer leichten Krümmung. In der Fig. 7A ist das entsprechende Abweichungssignal zA der ersten Prozessvariante PA eingezeichnet. Dieses Abweichungssignal zA zeigt Schwankungen, die hauptsächlich (bis auf einen Ausreißer am Anfang) im Bereich zwischen -0,001 mm und +0,001 mm liegen.

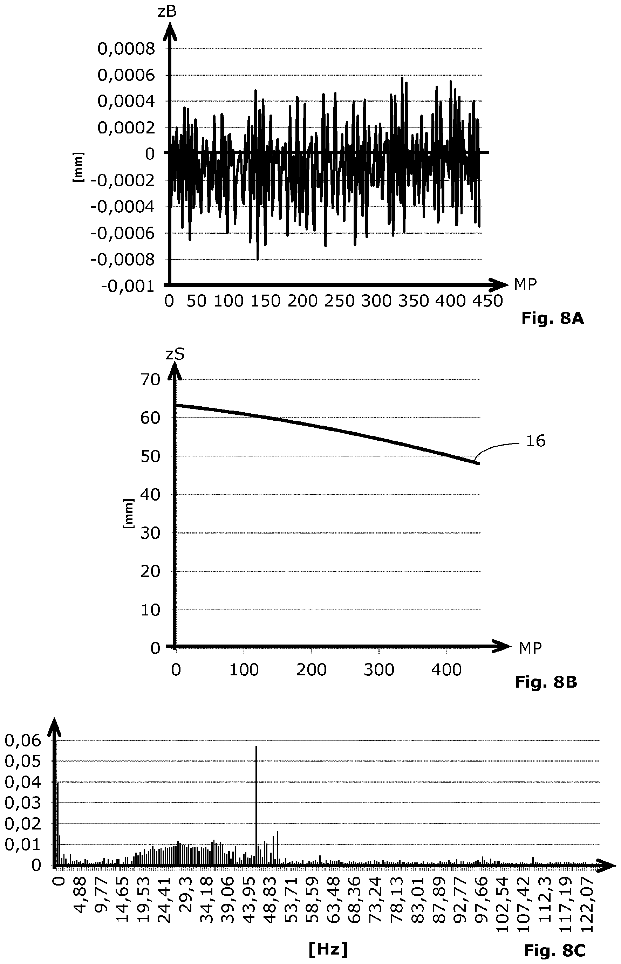

In der Fig. 8B sind die Soll-Werte zS der zweiten Prozessvariante PB für die Z-Achse über eine Anzahl von Messpunkten MP aufgetragen. Die Kurve 16, die sich aus diesen Messpunkten MP ergibt, hat einen monoton fallenden Verlauf mit einer leichten Krümmung. In der Fig. 8A ist das entsprechende Abweichungssignal zB der zweiten Prozessvariante PB eingezeichnet. Dieses Abweichungssignal zB zeigt Schwankungen, die hauptsächlich (bis auf einen Ausreißer nach unten) im Bereich zwischen -0,0007 mm und +0,0006 mm liegen.

Die Erfassung der Signale bzw. Werte für die erste Prozessvariante PA und für die zweite Prozessvariante PB erfolgte hier nur für einen Teilbereich des Gesamtbearbeitungsprozesses.

Um nun einen Vergleich dieser beiden Prozessvarianten PA und PB zu ermöglichen, können die entsprechenden Abweichungssignale zA der Fig. 7A und der Fig. 8A einer weiteren signaltechnischen Verarbeitung unterzogen werden. So kann beispielhaft zu Analysezwecken ein FFT-Spektrum der Abweichungssignale zA der Fig. 7A und der Fig. 8A gebildet werden. Das FFT-Spektrum des Abweichungssignals zA der Fig. 7A ist in Fig. 7C dargestellt. Das FFT-Spektrum des Abweichungssignals zB der Fig. 8A ist in Fig. 8C dargestellt. Bei den Darstellungen der Figuren 7C und 8C ist auf der vertikalen Achse die Amplitude und auf der horizontalen Achse die Frequenz in Hz aufgetragen.

Wenn man nun die beiden FFT-Spektren der Figuren 7C und 8C miteinander vergleicht (z.B. indem man die beiden Spektren einander überlagert), zeigen sich wesentliche Unterschiede der beiden Spektren in den Frequenzbereichen zwischen 5 und 18 Hz sowie zwischen 35 und 44 Hz.

Durch eine rechnerische Rücktransformation der so gewonnen Informationen über die Kinematik der Maschine 10, kann nun der Einfluss der festgestellten Abweichungen auf das zu bearbeitende Werkstück 1 für den untersuchten Bearbeitungsabschnitt bestimmt werden.

Anhand von globalen Bearbeitungsprozessdaten kann die Zeit für jeden Bearbeitungsabschnitt analytisch bestimmt werden. Es wird beispielhaft angenommen, dass für den hier untersuchten Bearbeitungsabschnitt eine Zeit von t = 3 s benötigt wird. Für die festgestellte Abweichungen der FFT-Spektren im Frequenzbereich von 5 - 18 Hz bedeutet dies, dass beispielhaft für eine maximale Abweichung bei einer Frequenz von 15 Hz auf der bearbeiteten Oberfläche des Werkstücks 1 durch die Bewegung der untersuchten Z-Achse ca. 45 regelmäßige Ereignisse stattfinden. Bezieht man diese Information nun auf den tatsächlichen Verfahrweg der Z-Achse, so kann bestimmt werden in welchem Abstand auf der Z-Achse selbst ein Fehler auftritt. Wird diese Information auf das Werkstück 1 selbst bezogen, so kann am Beispiel eines Zahnrads mit 15 Zähnen die Anzahl der Ereignisse auf eine komplette Umdrehung des Werkstücks 1 bezogen werden.

Wird im Speziellen für Zahnrad-Werkstücke der Tragbildbereich der Verzahnung berücksichtigt, so kann über dieses Verfahren der Einfluss auf das Ergebnis der akustischen und geometrischen Radsatzprüfung zweier gepaarter Zahnräder geschlossen werden. So entsprechen 45 regemäßige Ereignisse eines Zahns insgesamt 675 Ereignisse über den kompletten Umfang des Werkstücks 1. Auf Basis der theoretischen Auslegung oder anhand von Messungen lässt sich der Anteil des Tragbildbereichs im Vergleich zu einer kompletten Zahnflanke bestimmen. Dieser wird in diesem Fall zu 40 % der Zahnflanke bestimmt. Hieraus ergibt sich nun die resultierende Anzahl an Ereignissen je Umdrehung des Werkstücks 1 von 0,4*675 Ereignisse = 270 Ereignisse.

Durch einen Vergleich der Signale, respektive der kinematischen Verhaltensmuster bei gleichen Randbedingungen jedoch zu unterschiedlichen Zeitpunkten können mögliche Trends, die beispielhaft durch Verschleiß von Maschinenkomponenten der Maschine 10 verursacht werden, festgestellt werden.

Vorzugsweise kann bei allen Ausführungsformen die Sensitivität des Verfahrens der Erfindung eingestellt werden. Das kann z.B. dadurch geschehen, dass man Parameterfenster für den Vergleich reduziert oder dass man die Toleranzangaben oder Schwellwert (z.B. SWx oder SWy) enger fasst.

Die Sensitivität des Verfahrens kann aber bei allen Ausführungsformen zusätzlich oder alternativ auch durch das Anwenden von Filterfunktionen (im analogen und/oder digitalen Bereich der Verarbeitung) und/oder durch die Wahl geeigneter Parameter bei der Fourier-Transformation beeinflusst werden. So kann man z.B. mit einem geeigneten Filter sehr tief-frequente Signalstörungen ausblenden, die sich z.B. aus einer Vibration des Hallenfußbodens ergeben.

**Bezugszeichen:**

| | |
|---|---|
| Werkstück / Bauteil | 1 |
| (Schleif-)Werkzeug | 2 |
| Pfeil | 3 |
| Signalausschlag | 4 |
| Phase des Schruppwälzens | 5 |
| Phase des Schlichtwälzens | 6 |
| Signalausschlag | 7 |
| Signalausschlag | 8 |
| Kurve | 9 |
| Bearbeitungsmaschine / Mehrachsmaschine | 10 |
| Erste Maschine | 10.1 |
| zweite Maschine | 10.2 |
| Maschinenbett | 11 |
| Werkzeugschlitten | 12 |
| Turm | 13 |
| Werkstückspindel | 14 |
| Werkzeugspindel | 15 |
| Kurve | 16 |
| | |
| Sensormittel | 20 |
| | |
| Verarbeitungsmodul | 100 |
| Verarbeitungsmodul | 100.1, 100.2 |
| Datenbank | 101 |
| Vergleichen / Vergleichsprozess | 102 |
| Kommunikationsverbindung / Bus | 103 |
| Kommunikationsverbindung / Bus | 104 |
| Kommunikationsverbindung / Bus | 105 |
| Kommunikationsverbindung / Bus | 106 |
| Kommunikationsverbindung / Bus | 107 |
| | |
| Werkzeugachse / Rotationsachse | A1 |
| Werkstückachse / Rotationsachse | B |
| Bedingungen (eines Regelsatzes) | B1, B2, B3, B4, B5, B6, B7, B8 |
| Abweichungssignal | bA(t) |
| Soll-Signal | bS(t) |
| Schwenkachse | C |
| Abweichungssignal | cA(t) |
| Soll-Signal | cS(t) |
| Wegstrecke | Δx |
| Wegstrecke | Δs |
| Zeitabschnitt | Δt |
| Stromaufnahme in Prozent als Funktion des Spanvolumens | I(VS) % |
| Kurvenschar | K |
| Kurve | K1 |
| Steigung | m |
| Messpunkte | MP |
| Erste Prozessvariante | PA |
| zweite Prozessvariante | PB |
| Wert | s1 |
| Signal als Funktion der Zeit | s(t) |
| Schritte | S1, S2 |
| Schwellwert | SWx |
| Schwellwert | SWy |
| Zeit | t |
| Spanvolumen | VS |
| Verhaltensmuster | VM |
| Zahnlücken | Z1 - Z5 |
| Linear-Achsen | X, Y, Z |
| Abweichungssignal | xA(t) |
| Abweichungssignal | yA(t) |
| Abweichungssignal | zA(t) |
| Abweichungssignal | zA |
| Abweichungssignal | zB |
| Soll-Signal | xS(t) |
| Soll-Signal | yS(t) |
| Soll-Signal | zS(t) |
| Soll-Werte | zS |

## Patentansprüche

1. Automatisiertes Verfahren zum Überwachen einer CNC-gesteuerten, ersten Mehrachsmaschine (10) beim Bearbeiten eines verzahnten Bauteils (1) mit einem Werkzeug (2), mit den folgenden Schritten:
• Ausführen einer relativen Bearbeitungsbewegung des Werkzeugs (2) in Bezug zu dem Bauteil (1),
• Erfassen von Kinematik-Information indem simultan die Signale mehrerer Sensormittel (20) der ersten Mehrachsmaschine (10) erfasst werden, wobei die für die Bearbeitung des verzahnten Bauteils (1) vorgegebenen Bewegungen, respektive die entsprechenden Signale, im realen Bearbeitungsprozess erfasst werden, wobei die Kinematik-Information Weginformation der ersten Mehrachsmaschine (10) umfasst,
• Umsetzen der Kinematik-Information in einen digitalen Datensatz, wobei der digitale Datensatz ein kinematisches Verhaltensmuster (VM) der ersten Mehrachsmaschine (10) repräsentiert,
• Durchführen eines Vergleichsprozesses (102) durch
i. Bereitstellen eines digitalen Vergleichsdatensatzes aus einem Speicher (102), wobei der digitale Vergleichsdatensatz in einer baugleichen, zweiten Mehrachsmaschine (10) ermittelt wurde, wobei der digitale Vergleichsdatensatz ein geprüftes kinematisches Verhaltensmuster (VM) repräsentiert,
ii. Vergleichen des digitalen Datensatzes mit dem digitalen Vergleichsdatensatz durch ein räumliches und/oder zeitliches Inbezugsetzen der Datensätze, um Ähnlichkeiten und/oder Abweichungen zwischen dem digitalen Datensatz und dem Vergleichsdatensatz zu ermitteln.

2. Verfahren nach Anspruch 1, **dadurch gekennzeichnet, dass** die Kinematik-Information Zeitinformation der ersten Mehrachsmaschine (10) umfasst, wobei vorzugsweise die Kinematik-Information als Funktion des Weges und/oder der Zeit (t) vorliegt.

3. Verfahren nach Anspruch 1, **dadurch gekennzeichnet, dass** die Kinematik-Information einen direkten räumlichen und/oder zeitlichen Bezug hat.

4. Verfahren nach Anspruch 1, **dadurch gekennzeichnet, dass** der Vergleichsprozess (102) ein regelbasierter Vergleichsprozess (102) ist, bei dem durch ein Verarbeitungsmodul (100) oder durch die erste Mehrachsmaschine (10) Regeln oder ein Regelsatz zur Anwendung gebracht wird.

5. Verarbeitungsmodul (100), das zur Verwendung im Zusammenhang mit mindestens einer ersten Mehrachsmaschine (10) ausgelegt ist, wobei die erste Mehrachsmaschine (10) umfasst:
• eine Werkzeugspindel (15) zum Halten und Drehantreiben eines Werkzeugs (2),
• eine Werkstückspindel (14) zum Halten und Drehantreiben eines verzahnten Bauteils (1),
• mehrere CNC-gesteuerte Achsen (A1, B, C, X, Y, Z) zum Ausführen von Relativbewegungen des Werkzeugs (2) in Bezug zu dem Bauteil (1),
• mehrere Sensormittel (20), wobei das Verarbeitungsmodul (100) Mittel (103, 106, 107) zur Kommunikation mit den Sensormittel (20) der ersten Mehrachsmaschine (10) umfasst und wobei es zum Durchführen der folgenden Schritte ausgelegt oder programmiert ist:
• Erfassen von Kinematik-Information mittels simultaner Erfassung der Signale der mehreren Sensormittel (20) der ersten Mehrachsmaschine (10), wobei die für die Bearbeitung des verzahnten Bauteils (1) vorgegebenen Bewegungen, respektive die entsprechenden Signale, im realen Bearbeitungsprozess erfasst werden, wobei die Kinematik-Information Weginformation der ersten Mehrachsmaschine (10) umfasst,
• Umsetzen der Kinematik-Information in einen digitalen Datensatz, wobei der digitale Datensatz ein kinematisches Verhaltensmuster (VM) der Mehrachsmaschine (10) repräsentiert,
• Durchführen eines Vergleichsprozesses (102) durch
i. Bereitstellen eines digitalen Vergleichsdatensatzes aus einem Speicher (101),
ii. Vergleichen des digitalen Datensatzes mit dem digitalen Vergleichsdatensatz durch ein räumliches und/oder zeitliches Inbezugsetzen der Datensätze, um Ähnlichkeiten und/oder Abweichungen zwischen dem digitalen Datensatz und dem Vergleichsdatensatz zu ermitteln, wobei der digitale Vergleichsdatensatz ein geprüftes kinematisches Verhaltensmuster (VM) repräsentiert, wobei der digitale Vergleichsdatensatz in einer baugleichen, zweiten Mehrachsmaschine (10) ermittelt wurde,
wobei das Verarbeitungsmodul (100) dazu ausgelegt ist in die erste Mehrachsmaschine (10) integriert zu werden, oder dass es dazu ausgelegt ist mit der ersten Mehrachsmaschine (10) verbunden zu werden.

6. Verarbeitungsmodul (100) nach Anspruch 5, **dadurch gekennzeichnet, dass** die Kinematik-Information Zeitinformation der ersten Mehrachsmaschine (10) umfasst, wobei vorzugsweise die Kinematik-Information als Funktion des Weges und/oder der Zeit (t) vorliegt.

7. Verarbeitungsmodul (100) nach Anspruch 5, **dadurch gekennzeichnet, dass** die Kinematik-Information einen direkten räumlichen und/oder zeitlichen Bezug hat.

8. Verarbeitungsmodul (100) nach Anspruch 5, **dadurch gekennzeichnet, dass** der Vergleichsprozess (102) ein regelbasierter Vergleichsprozess (102) ist, der es dem Verarbeitungsmodul (100) ermöglicht im Rahmen des Vergleichsprozesses (102) Regeln oder ein Regelsatz zur Anwendung zu bringen.

9. CNC-gesteuerte Mehrachsmaschine (10) zum Bearbeiten eines verzahnten Bauteils (1) mit einem Werkzeug (2), **dadurch gekennzeichnet, dass** die Mehrachsmaschine (10) ein Verarbeitungsmodul (100) nach einem der Ansprüche 5 - 8 umfasst und dass die Mehrachsmaschine (10) Mittel (103, 106, 107) zur Kommunikation mit dem/den Sensormittel (20) umfasst, wobei die CNC-gesteuerte Mehrachsmaschine (10) die erste Mehrachsmaschine (10) ist.

## Claims

1. Automated method for monitoring a CNC-controlled, first multi-axis machine (10) when machining a toothed component (1) with a tool (2), comprising the following steps of:
• performing a relative machining movement of the tool (2) in relation to the component (1),
• recording kinematic information by simultaneously recording the signals of a plurality of sensor means (20) of the first multi-axis machine (10), wherein the movements specified for the machining of the toothed component (1), or the corresponding signals, are recorded in the real machining process, wherein the kinematic information comprises path information of the first multi-axis machine (10),
• converting the kinematic information into a digital data set, wherein the digital data set represents a kinematic behavior pattern (VM) of the first multi-axis machine (10),
• carrying out a comparison process (102) by
i. providing a digital comparison data set from a memory (102), wherein the digital comparison data set was determined in an identical second multi-axis machine (10), wherein the digital comparison data set represents a tested kinematic behavior pattern (VM),
ii. comparing the digital data set with the digital comparison data set by spatially and/or temporally referencing the data sets in order to determine similarities and/or deviations between the digital data set and the comparison data set.

2. Method according to claim 1, **characterized in that** the kinematic information comprises time information of the first multi-axis machine (10), wherein the kinematic information is preferably present as a function of the path and/or the time (t).

3. Method according to claim 1, **characterized in that** the kinematic information has a direct spatial and/or temporal reference.

4. Method according to claim 1, **characterized in that** the comparison process (102) is a rule-based comparison process (102) in which rules or a set of rules are applied by a processing module (100) or by the first multi-axis machine (10).

5. Processing module (100) adapted for use in conjunction with at least a first multi-axis machine (10), wherein the first multi-axis machine (10) comprises:
• a tool spindle (15) for holding and rotating a tool (2),
• a workpiece spindle (14) for holding and rotatably driving a toothed component (1),
• a plurality of CNC-controlled axes (A1, B, C, X, Y, Z) for carrying out relative movements of the tool (2) in relation to the component (1),
• a plurality of sensor means (20),
wherein the processing module (100) comprises means (103, 106, 107) for communicating with the sensor means (20) of the first multi-axis machine (10) and wherein it is adapted or programmed to perform the following steps:
• recording kinematic information by simultaneously recording the signals of the plurality of sensor means (20) of the first multi-axis machine (10), wherein the movements specified for the machining of the toothed component (1), or the corresponding signals, are recorded in the real machining process, wherein the kinematic information comprises path information of the first multi-axis machine (10),
• converting the kinematic information into a digital data set, wherein the digital data set represents a kinematic behavior pattern (VM) of the multi-axis machine (10),
• carrying out a comparison process (102) by
i. providing a digital comparison data set from a memory (101),
ii. comparing the digital data set with the digital comparison data set by spatially and/or temporally referencing the data sets in order to determine similarities and/or deviations between the digital data set and the comparison data set, wherein the digital comparison data set represents a tested kinematic behavior pattern (VM), wherein the digital comparison data set was determined in an identical second multi-axis machine (10),
wherein the processing module (100) is designed to be integrated into the first multi-axis machine (10), or in that it is designed to be connected to the first multi-axis machine (10).

6. Processing module (100) according to claim 5, **characterized in that** the kinematic information comprises time information of the first multi-axis machine (10), wherein the kinematic information is preferably present as a function of the path and/or the time (t).

7. Processing module (100) according to claim 5, **characterized in that** the kinematic information has a direct spatial and/or temporal reference.

8. Processing module (100) according to claim 5, **characterized in that** the comparison process (102) is a rule-based comparison process (102) that enables the processing module (100) to apply rules or a set of rules within the comparison process (102).

9. CNC-controlled multi-axis machine (10) for processing a toothed component (1) with a tool (2), **characterized in that** the multi-axis machine (10) comprises a processing module (100) according to one of claims 5-8 and **in that** the multi-axis machine (10) comprises means (103, 106, 107) for communicating with the sensor means (20), wherein the CNC-controlled multi-axis machine (10) is the first multi-axis machine (10).

## Revendications

1. Procédé automatisé de surveillance d'une première machine multiaxe à commande numérique (10) lors de l'usinage d'une pièce dentée (1) avec un outil (2), comportant les étapes suivantes :
• exécution d'un déplacement d'usinage relatif de l'outil (2) par rapport à la pièce (1),
• enregistrement d'informations de cinématique en ce que les signaux de plusieurs capteurs (20) de la première machine multiaxe (10) sont enregistrés simultanément, où les déplacements prévus pour l'usinage de la pièce dentée (1), et respectivement les signaux correspondants, sont enregistrés lors d'un processus d'usinage réel, les informations de cinématique comportant des informations de trajectoire de la première machine multiaxe (10),
• conversion des informations de cinématique en un jeu de données numériques, le jeu de données numériques représentant un modèle de comportement cinématique (VM) de la première machine multiaxe (10),
• réalisation d'un processus de comparaison (102) par
i. mise à disposition d'un jeu de données numériques de comparaison provenant d'une mémoire (102), où le jeu de données numériques de comparaison a été déterminé dans une seconde machine multiaxe (10) de conception similaire, le jeu de données numériques de comparaison représentant un modèle de comportement cinématique vérifié (VM),
ii. comparaison du jeu de données numériques avec le jeu de données numériques de comparaison par une mise en relation spatiale et/ou temporelle des jeux de données afin de déterminer des similitudes et/ou des divergences entre le jeu de données numériques et le jeu de données de comparaison.

2. Procédé selon la revendication 1, **caractérisé en ce que** les informations de cinématique comportent des informations temporelles de la première machine multiaxe (10), les informations de cinématique se présentant de préférence en tant que fonction de la trajectoire et/ou du temps (t).

3. Procédé selon la revendication 1, **caractérisé en ce que** les informations de cinématique ont un rapport spatial et/ou temporel direct.

4. Procédé selon la revendication 1, **caractérisé en ce que** le processus de comparaison (102) est un processus de comparaison à base de règles (102), selon lequel des règles ou un jeu de règles sont appliquées par un module de traitement (100) ou par la première machine multiaxe (10).

5. Module de traitement (100) conçu pour une utilisation en relation avec au moins une première machine multiaxe (10), la première machine multiaxe (10) comprenant :
• une broche d'outil (15) destinée à retenir et entraîner en rotation un outil (2),
• une broche porte-pièce (14) destinée à retenir et à entraîner en rotation une pièce dentée (1),
• plusieurs axes à commande numérique (A1, B, C, X, Y, Z) pour exécuter des déplacements relatifs de l'outil (2) par rapport à la pièce (1),
• plusieurs capteurs (20), le module de traitement (100) comportant des moyens (103, 106, 107) qui permettent la communication avec le ou les capteurs (20) de la première machine multiaxe (10), celui-ci étant conçu et/ou programmé pour réaliser les étapes suivantes :
• enregistrement d'informations de cinématique au moyen d'une acquisition simultanée des signaux de plusieurs capteurs (20) de la première machine multiaxe (10), les déplacements prévus pour l'usinage de la pièce dentée (1), respectivement les signaux correspondants, étant enregistrés lors d'un processus d'usinage réel, les informations de cinématique comportant des informations de trajectoire de la première machine multiaxe (10),
• conversion des informations de cinématique en un jeu de données numériques, le jeu de données numériques représentant un modèle de comportement cinématique (VM) de la machine multiaxe (10),
• réalisation d'un processus de comparaison (102) par
i. mise à disposition d'un jeu de données numériques de comparaison provenant d'une mémoire (101),
ii. comparaison du jeu de données numériques avec le jeu de données numériques de comparaison par une mise en relation spatiale et/ou temporelle des jeux de données, afin de déterminer des similitudes et/ou des divergences entre le jeu de données numériques et le jeu de données de comparaison, le jeu de données de comparaison représentant un modèle de comportement cinématique (VM) vérifié, le jeu de données numériques de comparaison ayant été déterminé dans une seconde machine multiaxe (10) de conception similaire,
le module de traitement (100) étant conçu pour être intégré dans la première machine multiaxe (10), ou étant conçu pour être relié avec la première machine multiaxe (10).

6. Module de traitement (100) selon la revendication 5, **caractérisé en ce que** les informations de cinématique comportent des informations temporelles de la première machine multiaxe (10), les informations de cinématique se présentant de préférence en tant que fonction de la trajectoire et/ou du temps (t).

7. Module de traitement (100) selon la revendication 5, **caractérisé en ce que** les informations de cinématique ont un rapport spatial et/ou temporel direct.

8. Module de traitement (100) selon la revendication 5, **caractérisé en ce que** le processus de comparaison (102) est un processus de comparaison (102) basé sur des règles, qui permet au module de traitement (100), dans le cadre du processus de comparaison (102), d'appliquer des règles ou un jeu de règles.

9. Machine multiaxe à commande numérique (10) destinée à usiner une pièce dentée (1) avec un outil (2), **caractérisée en ce que** la machine multiaxe (10) comprend un module de traitement (100) selon l'une des revendications 5 à 8, et **en ce que** la machine multiaxe (10) comprend des moyens (103, 106, 107) de communication avec le/les capteur(s) (20), la machine multiaxe à commande numérique (10) étant la première machine multiaxe (10).
